# EUROPÄISCHE PATENTSCHRIFT

(11) **EP 0 527 132 B1**
(45) Veröffentlichungstag und Bekanntmachung des Hinweises auf die Patenterteilung: **29.05.1996**
(21) Anmeldenummer: 91903272.2
(22) Anmeldetag: 11.02.1991
(51) Int. Cl.: H04N 7/24, H04N 7/32

(54) **VERFAHREN ZUR AUFBEREITUNG VON BILDDATEN FÜR ÜBERTRAGUNGSZWECKE SOWIE ANWENDUNG**
METHOD OF PROCESSING IMAGE DATA FOR TRANSMISSION, AND USE OF THIS PROCESS
PROCEDE POUR LE TRAITEMENT DE DONNEES RELATIVES A DES IMAGES DEVANT ETRE TRANSMISES ET SON APPLICATION

(30) Priorität: 30.04.1990 DE 4013842
(43) Veröffentlichungstag der Anmeldung: 17.02.1993
(73) Patentinhaber: ROBERT BOSCH GMBH, 70442 Stuttgart (DE)
(72) Erfinder: MAYER, Jörg, D-7000 Stuttgart 50 (DE)
(86) Internationale Anmeldenummer: DE9100109
(87) Internationale Veröffentlichungsnummer: WO9117629

(56) Entgegenhaltungen:
- US-A- 4 575 756
- US-A- 4 609 941
- US-A- 4 667 233
- US-A- 4 805 017
- US-A- 4 837 618
- US-A- 4 958 226
- Review of the Electrical Communication Laboratories, Band 32, Nr. 3, Mai 1984, (Tokyo, JP), N. Mukawa et al.: "Temporal subsampling methods in TV signal interframe coding", Seiten 508-516

## Beschreibung

Die Erfindung geht aus von einem Verfahren nach dem Oberbegriff des Patentanspruchs 1.

Bei der Aufbereitung von Bilddaten für die Übertragung über einen Übertragungskanal mit begrenzter Übertragungskapazität ist es bekannt, senderseitig vorhandene Quellbilder auszulassen und die ausgelassenen Quellbilder empfängerseitig aus zwei benachbarten übertragenen Quellbildern zu interpolieren. Dies führt jedoch zur Mehrfachdarstellung bewegter Bildbereiche mit ruckartiger Wiedergabe.

Bei der EP-A-236 519 wird zur Vermeidung dieses Nachteils für jedes Bildelement eines ausgelassenen Quellbildes ein Bewegungsvektor ermittelt, der für eine bewegungskompensierte Interpolation herangezogen wird.

Aus der DE-A-37 04 777 ist es bekannt, für Teilbildbereiche, die einen großen Bewegungsanteil aufweisen, transformationscodierte Daten aufzubereiten und Teilbildbereiche mit geringerem Bewegungsanteil durch Bewegungsvektoren zu beschreiben. Als Kriterium für wenig geänderte und stark geänderte Teilbildbereiche wird ein Schwellwert herangezogen.

Aufgabe der Erfindung ist es, ein Verfahren ausgehend vom Oberbegriff des Patentanspruchs 1 anzugeben, welches die durch eine Transformationscodierung hervorgerufenen Strukturmuster nicht störend wahrnehmbar werden läßt, insbesondere in den Fällen, wo eine Bewegungskompensation wegen einer begrenzten Auflösung unzulänglich ist. Außerdem soll eine Anwendung aufgezeigt werden.

Diese Aufgabe wird bezüglich des Verfahrens durch die Merkmale des Patentanspruchs 1 gelöst und bezüglich der Anwendung durch die Merkmale des Patentanspruchs 9. Anspruch 3 zeigt ein Verfahren zur Rekonstruktion von nach dem Verfahren gemäß Patentanspruch 1 aufbereiteten Bilddaten auf, und die übrigen Patentansprüche beinhalten vorteilhafte Ausgestaltungen.

Die Erfindung beruht auf folgenden Erkenntnissen: Es ist allgemein üblich, nur die Teilbildbereiche zu übertragen, in denen Änderungen festgestellt wurden. Diese Feststellung wird von einem Segmenter getroffen, der zur Reduzierung falscher Entscheidungen an das Rauschen der Kamera adaptiert werden-kann. Zusätzlich findet Bewegungskompensation statt. In üblichen Video-Konferenzsituationen sind unter Verwendung eines Kamerastativs bis zu 50 % des Bildinhalts ungeändert.

Das ändert sich, wenn die Kamera in der Hand gehalten wird. Es gibt nun - verursacht durch kleine Bewegungen < 1 pel - keinen statischen Bildinhalt mehr. Jeder Teilbildbereich (Bildblock) muß übertragen werden, um den Zusammenhalt des Bildes - homogener subjektiver Bildeindruck - zu garantieren. Die Bewegungskompensation mittels Vektoren kann wegen einer definitionsgemäß begrenzten Auflösung von 1 pel keine Verbesserung erzielen. Die Folge ist eine relativ grobe Transformationscodierungs (z.B. DCT "discrete cosine transform")-Quantisierungsschwelle, die Blockartefakte sichtbar werden läßt. Bei der Erfindung wird der Segmenter-Schwellwert von einem Quellbild zu einem folgenden Quellbild umgeschaltet. Beispielsweise wird vereinbart, daß der Schwellwert bei geradzahligen Bildern auf ihrem normalen Wert ist. Dadurch wird ohne Verwendung eines Stativs fast jeder Block (Teilbildbereich) übertragen. Dann wird die Schwelle für die ungeradzahligen Bilder auf einen sehr hohen Wert gesetzt, so daß nur Bildbereiche mit großen Änderungen erfaßt werden. Zusätzlich kann auch der Wert des Verschiebungsvektors als Maß für eine Änderung betrachtet werden. Die Anzahl der in ungeradzahligen Bildern übertragenen Blöcke ist damit reduziert. Folglich kann die DCT-Quantisierungsschwelle bei gleicher Kanalkapazität abgesenkt werden, und die Bildqualität wird besser. In einem üblichen Videocoder kann das Verfahren nach der Erfindung durch eine Modifikation des Steuerablaufs nachgerüstet werden.

Das Verfahren nach der Erfindung führt für jegliche Arten von Bewegungen, z.B. zahlreiche kleine Bewegungen als auch wenige große Bewegungen, zu einer guten Rekonstruktion ohne Blockstrukturen oder ruckartigen Bewegungen.

Anhand der Zeichnungen wird ein Ausführungsbeispiel der Erfindung nun näher erläutert. Es zeigen
Fig. 1 eine Quellbildsequenz mit Umschaltung der Segmenter-Schwellwerte,
Fig. 2 die Rekonstruktion ausgelassener Quellbilder,
Fig. 3 ein Blockschaltbild eines rekursiven Filters zur Rauschunterdrückung.

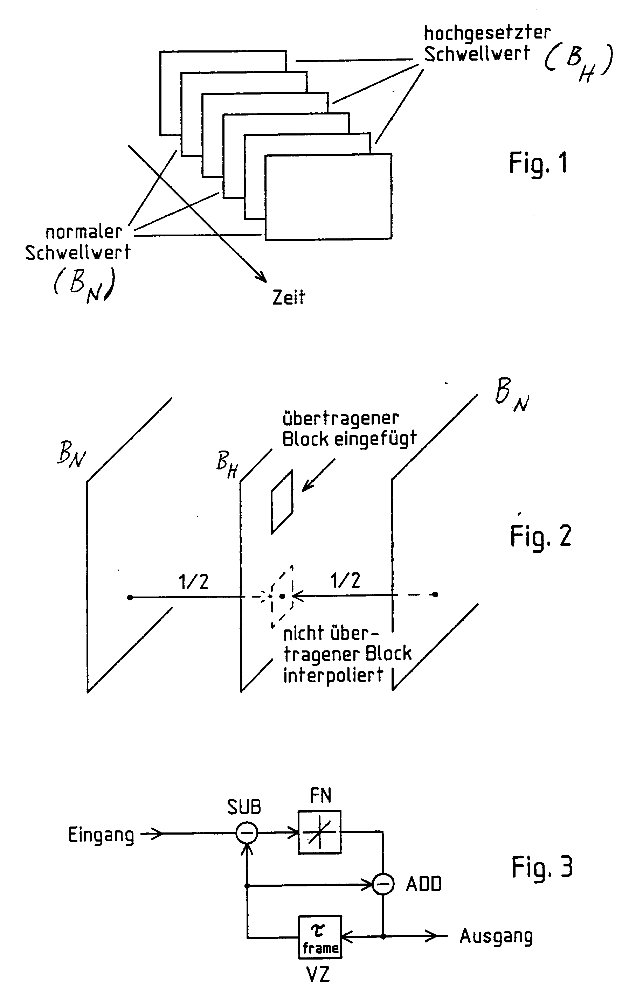

Wie in Fig. 1 dargestellt ist, wird für jedes zweite Quellbild B_{N}, B_{H} der Segmentschwellwert, d.h. der Schwellwert, nach dem eine Entscheidung getroffen wird, ob ein Teilbildbereich, z.B. rechteckiger Block, eine Änderung erfahren hat oder nicht, umgeschaltet. Die Ermittlung von Segmenter-Schwellwerten kann beispielsweise durch Auswertung von Bild-zu-Bild-Differenzen (Framedifferenz FD) erfolgen, vgl. beispielsweise US -A-4,771,331 oder Dissertation J. Klie "Codierung von Fernsehsignalen für niedrige Übertragungsbitraten", TU Hannover, 1978, Seiten 62 bis 69. Anstelle eines Schwellwertes kann auch ein anderes Kriterium, welches eine Unterscheidung zwischen geänderten und nicht geänderten Bildbereichen gestattet, verwendet werden. Es wird beispielsweise vereinbart, daß der Schwellwert bei geradzahligen Bildern B_{N} auf ihrem normalen - niedrigen - Wert ist, der so gewählt ist, daß die Integrität eines sich bewegenden Objekts gewahrt ist. Dadurch wird ohne Verwendung eines Stativs fast jeder Block übertragen. Doppelkanten bei der Betrachtung eines Bewegungsablaufes treten somit nicht auf. Dann wird der Schwellwert für die ungeradzahligen Bilder B_{H} auf einen sehr hohen Wert gesetzt, so daß nur Teilbildbereiche mit großen Änderungen erfaßt werden. Falls aufgrund der Überschreitung des niedrigen normalen Schwellwertes bei geradzahligen Bildern B_{N} oder des bei ungeradzahligen Bildern B_{H} hochgesetzten Schwellwertes Bewegungen erkannt wurden, werden für den betreffenden Teilbildbereich in bekannter Weise transformationscodierte Daten aufbereitet und/oder ein Bewegungsvektor ermittelt (vgl. beispielsweise DE-A-37 04 777). Die transformationscodierten Daten und die Bewegungsvektoren werden gegebenenfalls nach einer Quantisierung und einer bekannten VWL-Codierung über den Übertragungskanal mit begrenzter Bandbreite, z.B. einen 384 kbit/s-Kanal übertragen. Da nur sehr wenige Teilbildbereiche von ungeradzahligen Quellbildern B_{H} übertragen werden müssen, kann bei gleicher zur Verfügung stehender Kanalkapazität im Vergleich zur üblichen Signal aufbereitung die Quantisierungsschwelle abgesenkt werden und die Bildqualität dadurch verbessert werden - grobe Blockstrukturen treten somit nicht auf. In einem üblichen Videocoder kann das Verfahren nach der Erfindung durch eine Modifikation des Steuerablaufs nachgerüstet werden.

Im Decoder werden die nur teilweise übertragenen ungeradzahligen Bilder B_{H} durch lineare Interpolation, z.B. aus benachbarten Bildern rekonstruiert (Fig. 2). In diese Rekonstruktion werden die übertragenen Teilbildbereiche (Blöcke) - DCT-Koeffizienten und/oder Bewegungsvektoren - eingesetzt. Durch Nachschalten eines zeitlichen nichtlinearen rekursiven Filters wird zusätzlich Rauschen vermindert. Ein Beispiel für einen solchen Filter zeigt Fig. 3. Das Eingangssignal - rekonstruiertes ungeradzahliges Bild - wird über einen Subtrahierer SUB einem Funktionsnetzwerk FN zugeführt. Dieses Funktionsnetzwerk hat eine Übertragungsfunktion, die kleine Amplitudenänderungen unterdrückt, große Amplitudenänderungen jedoch unverzerrt läßt. Am Ausgang des Funktionsnetzwerkes FN ist das gefilterte Signal abnehmbar. Das gefilterte Signal wird einem Verzögerungsglied VZ zugeführt, das eine Verzögerung aufweist, die dem zeitlichen Abstand zweier aufeinanderfolgender Quellbilder (frame) entspricht. Das verzögerte Signal wird dem Subtrahierer SUB zugeführt und dem Ausgangssignal über einen Addierer ADD zugesetzt. Das Filter kann auch bezüglich seiner Kennlinie als "Kompromißfilter" aufgebaut werden, wobei der Kompromiß zwischen der zulässigen Verschleifung bewegter kontrastarmer Kanten und dem tolerierbaren Bildrauschen geschlossen wird. Die in Fig. 3 gezeigte Kennlinie (des Funktionsnetzwerkes) ist nur als beispielhaft zu betrachten. Sie kann jeweils an die gewünschten Eigenschaften des Filters angepaßt werden.

Das Verfahren führt im Decoder zu einer zusätzlichen Verzögerung von einer Bilddauer. Der dafür notwendige Bildspeicher ist bei Verwendung eines Decoders für hochauflösende Standbilder sowieso vorhanden, so daß kein Zusatzaufwand entsteht.

Als Maß für die Entscheidung, ob für einen Teilbildbereich transformationscodierte Daten aufbereitet werden, kann neben dem Schwellwert auch der Betrag des Bewegungsvektors herangezogen werden.

Für die Festlegung des hochgesetzten Schwellwertes ist auch die zu erwartende Gesamtbildaktivität zu betrachten.. Besonders vorteilhaft ist es, diesen hochgesetzten Schwellwert in Abhängigkeit der zu übetragenden Gesamtbitrate festzulegen. Untersuchungen haben gezeigt, daß der Schwellwert günstig ist, wenn ca. 5 bis 15 % der zu übertragenden Gesamtbitrate auf jene Teilbildbereiche entfällt, bei denen der Schwellwert überschritten wird.

Es ist natürlich auch möglich, diesen Schwellwert über mehrere Quellbilder verteilt allmählich hochzusetzen und wieder abzubauen. Dies kann auch in Abhängigkeit einer Bildaktivitätsfunktion beispielsweise gemäß DE-A-37 04 777 erfolgen.

Das Verfahren nach der Erfindung ist zum Video Codec gemäß der CCITT Draft Revision of Recommendation H. 261 kompatibel.

## Patentansprüche

1. Verfahren zur Aufbereitung von Bilddaten für Übertragungszwecke, wobei die Bilddaten eines Quellbildes in Teilbildbereiche zerlegt werden und teilbildbereichsweise in Abhängigkeit eines als Änderungskriterium dienenden Schwellwertes, der zur Unterscheidung zwischen geänderten und ungeänderten Teilbildbereichen dient, transformationscodierte Daten aufbereitet werden und/oder ein Bewegungsvektor ermittelt wird, dadurch gekennzeichnet, daß der Schwellwert für ein auf das Quellbild (B_{N}) folgendes Quellbild (B_{H}) so hochgesetzt wird, daß nur für wenige Teilbildbereiche, bei denen große Änderungen gegenüber dem entsprechenden Teilbildbereich des vorhergehenden Quellbildes (B_{N}) auftreten, transformationscodierte Daten aufbereitet und/oder ein Bewegungsvektor ermittelt wird.

2. Verfahren nach Anspruch 1, dadurch gekennzeichnet, daß die Schritte des Anspruchs 1 ebenfalls auf zeitlich nachfolgende Quellbilder angewendet werden.

3. Verfahren zur Rekonstruktion von nach dem Verfahren gemäß Anspruch 2 aufbereiteten und übertragenen Bilddaten, dadurch gekennzeichnet, daß für jene Bilder (B_{H}), bei denen die Schwelle hochgesetzt wurde, eine Interpolation aus mindestens zwei Nachbarbildern (B_{N}), für die aufgrund ihrer niedrigen Schwellwerte für viele Teilbildbereiche transformationscodierte Daten aufbereitet wurden und/oder viele Bewegungsvektoren ermittelt wurden, vorgenommen wird und daß in dieses so gewonnene interpolierte Bild (B_{H}) jene Teilbildbereiche eingesetzt werden, für die transformationscodierte Daten aufbereitet wurden und/oder ein Bewegungsvektor zur Rekonstruktion des entsprechenden Teilbildbereiches ermittelt wurde.

4. Verfahren nach Anspruch 3, dadurch gekennzeichnet, daß für die Entscheidung, ob für einen Teilbildbereich transformationscodierte Daten aufbereitet werden, nicht nur der Schwellwert herangezogen wird, sondern zusätzlich auch der Betrag des Bewegungsvektors.

5. Verfahren nach einem der Ansprüche 1 bis 4, dadurch gekennzeichnet, daß der Schwellwert für alle geradzahligen Quellbilder (B_{N}) auf einen niedrigen Wert gesetzt wird, der so gewählt ist, daß die Integrität eines sich bewegenden Objekts gewahrt ist und daß der Schwellwert für alle ungeradzahligen Quellbilder (B_{H}) auf einen Wert hochgesetzt wird, der so gewählt ist, daß die durch die Transformationscodierung hervorgerufenen Blockstrukturen bei den interpolierten Bildern wirksam unterdrückt sind.

6. Verfahren nach einem der Ansprüche 3 bis 5, gekennzeichnet durch eine zeitliche nichtlineare Filterung der rekonstruierten Bilddaten im Sinne einer Unterdrückung kleiner Amplitudenänderungen.

7. Verfahren nach einem der Ansprüche 1 bis 6, dadurch gekennzeichnet, daß für die Festlegung des hochgesetzten Schwellwertes die zu übertragende Gesamtbitrate berücksichtigt wird.

8. Verfahren nach Anspruch 7, dadurch gekennzeichnet, daß der hochgesetzte Schwellwert so gewählt ist, daß 5 bis 15 % der zu übertragenden Gesamtbitrate auf jene Teilbildbereiche entfallen, bei denen der hochgesetzte Schwellwert überschritten wird.

9. Anwendung des Verfahrens nach einem der Ansprüche 1 bis 8 für Quellbildsequenzen mit kleinen Bewegungen von Quellbild zu Quellbild, insbesondere ohne Stativ aufgenommenen Quellbildsequenzen.

## Claims

1. Method for the conditioning of video data for transmission purposes, the video data of a source frame being split into partial frame areas and transform-coded data being conditioned and/or a motion vector being determined partial frame area by partial frame area as a function of a threshold value which serves as a change criterion and to differentiate between changed and unchanged partial frame areas, characterized in that the threshold value for a source frame (B_{H}) succeeding the source frame (B_{N}) is set so high that transform-coded data are conditioned and/or a motion vector is determined only for a few partial frame areas, in the case of which large changes occur with respect to the corresponding partial frame area of the preceding source frame (B_{N}).

2. Method according to Claim 1, characterized in that the steps of Claim 1 are likewise applied to chronologically succeeding source frames.

3. Method for the reconstruction of video data which have been conditioned in accordance with the method according to Claim 2 and have been transmitted, characterized in that, for those frames (B_{H}) in which the threshold was set high, there is carried out an interpolation of at least two adjacent frames (B_{N}) for which, on account of their low threshold values, transform-coded data were conditioned and/or many motion vectors were determined for many partial frame areas, and in that use is made in this interpolated frame (B_{H}), which is thus obtained, of those partial frame areas for which transform-coded data were conditioned and/or a motion vector for the reconstruction of the corresponding partial frame area was determined.

4. Method according to Claim 3, characterized in that not only the threshold value but also, in addition, the magnitude of the motion vector is used for the decision regarding whether transform-coded data are conditioned for a partial frame area.

5. Method according to one of Claims 1 to 4, characterized in that the threshold value for all of the even source frames (B_{N}) is set to a low value which is selected in such a way that the integrity of a moving object is preserved, and in that the threshold value for all of the odd source frames (B_{H}) is set to a high value which is selected in such a way that the block structures caused by the transform coding are effectively suppressed in the interpolated frames.

6. Method according to one of Claims 3 to 5, characterized by non-linear filtering, in the time domain, of the reconstructed video data in the sense of suppressing small amplitude changes.

7. Method according to one of Claims 1 to 6, characterized in that the total bit rate to be transmitted is taken into account when defining the threshold value which is set high.

8. Method according to Claim 7, characterized in that the threshold value which is set high is selected in such a way that 5 to 15% of the total bit rate to be transmitted is allocated to those partial frame areas in which the threshold value which is set high is exceeded.

9. Use of the method according to one of Claims 1 to 8 for source frame sequences having small movements from source frame to source frame, in particular source frame sequences recorded without a stand.

## Revendications

1. Procédé de traitement de données relatives à des images à des fins de transmission, dans lequel les données relatives aux images d'une image en langage source sont hachées en zones partielles d'images et sous cette forme de zones partielles d'images traitées en fonction d'une valeur de seuil servant de critère de modification, qui sert à opérer une différenciation entre des zones partielles d'images modifiées et non modifiées, les données codées de transformation sont retraitées et/ ou un vecteur de déplacement est déterminé, procédé caractérisé en ce que la valeur de seuil est mise pour une image en langage source (B_{H}) qui fait suite à une image en langage source (B_{N}) à un niveau élevé tel que les données codées de transformation ne sont retraitées et/ou un vecteur de déplacement n'est déterminé que pour peu de zones partielles d'image, dans le cas desquelles il se produit de grandes modifications par rapport à la zone partielle de l'image en langage source (B_{N}) précédente.

2. Procédé selon la revendication 1, caractérisé en ce que les séquences de la revendication 1 sont appliquées à des images en langage source qui se suivent dans le temps.

3. Procédé de reconstruction de données relatives à des images traitées et transmises d'après le procédé selon la revendication 2, caractérisé en ce que pour les images (B_{H}), dans le cas desquelles on a mis le seuil à un niveau élevé, on effectue une interpolation à partir d'au moins deux images voisines (B_{N}), pour lesquelles du fait de leurs basses valeurs de seuil pour beaucoup de zones partielles d'images on a traité les données codées de transformation et/ou on a déterminé beaucoup de vecteurs de mouvement et en ce que dans cette image (B_{H}) interpolée ainsi obtenue on insère les zones partielles d'image, pour lesquelles les données codées de transformation ont été traitées et/ou un vecteur de déplacement a été déterminé pour reconstruire la zone partielle d'image correspondante.

4. Procédé selon la revendication 3, caractérisé en ce que pour décider si des données codées de transformation ont été retraitées pour une zone partielle d'image, on utilise non seulement la valeur de seuil, mais en plus aussi le montant du vecteur de déplacement.

5. Procédé selon l'une des revendications 1 à 4, caractérisé en ce que la valeur de seuil est mise pour toutes les images en langage source d'ordre pair (B_{N}) sur une valeur basse, qui est choisie de telle façon que soit garantie l'intégrité d'un objet qui se déplace et en ce que la valeur de seuil pour toutes les images en langage source d'ordre impair (B_{H}) est mise sur une valeur d'un niveau élevé, qui est choisi de telle façon que les structures de bloc utilisées par la codification de transformation soient efficacement supprimées dans le cas des images interpolées.

6. Procédé selon l'une des revendications 3 à 5, caractérisé par un filtre non linéaire dans le temps des données relatives aux images reconstruites qui fonctionne dans le sens d'une suppression des petites variations d'amplitudes.

7. Procédé selon l'une des revendications 1 à 6, caractérisé en ce que pour la détermination de la valeur de seuil mise à un niveau élevé, on prend en considération le taux total de bit à transmettre.

8. Procédé selon la revendication 7, caractérisé en ce que la valeur de seuil mise à un niveau élevé est choisie de telle façon que 5 à 15% du taux total de bit à transmettre échappe des zones partielles d'image, dans le cas desquelles la valeur de seuil mise à un niveau élevé est dépassée.

9. Application du procédé selon l'une des revendications 1 à 8 pour des séquences d'images en langage source avec de petits mouvements, d'image en langage source à image en langage source, en particulier des séquences d'images en langage source reçues sans pied.
